Europäisches Patentamt

European Patent Office

Office européen des brevets

(19)

(11) Veröffentlichungsnummer: **0 198 265 B1**

(12)                 EUROPÄISCHE PATENTSCHRIFT

(45) Veröffentlichungstag der Patentschrift: **21.11.91**     (51) Int. Cl.⁵: **H02B 1/04**

(21) Anmeldenummer: **86103826.3**

(22) Anmeldetag: **20.03.86**

(54) **Halter zur Schnappbefestigung von elektrischen Schalt- und Installationsgeräten auf Normprofilschienen.**

(30) Priorität: **21.03.85 DE 3510207**

(43) Veröffentlichungstag der Anmeldung:
**22.10.86 Patentblatt 86/43**

(45) Bekanntmachung des Hinweises auf die
Patenterteilung:
**21.11.91 Patentblatt 91/47**

(84) Benannte Vertragsstaaten:
**BE CH FR GB IT LI NL SE**

(56) Entgegenhaltungen:
**EP-A- 0 075 661**
**DE-A- 3 248 124**
**FR-A- 2 464 013**

(73) Patentinhaber: **Klöckner-Moeller GmbH**
**Hein-Moeller-Strasse 7-11**
**W-5300 Bonn 1(DE)**

(72) Erfinder: **Buchbender, Guido**
**Gregor-Mendel-Strasse 34**
**W-5300 Bonn 1(DE)**

Rank Xerox (UK) Business Services

## Beschreibung

Die Erfindung betrifft einen Halter zur Schnappbefestigung von elektrischen Schalt- und Installationsgeräten auf Normprofiltragschienen nach dem Oberbegriff des Anspruches 1.

In Verteilern oder Schaltkästen sind zur Gerätebefestigung üblicherweise Normprofiltragschienen in einem bestimmten gegenseitigen Abstand angeordnet, an denen die Schalt- oder Installationsgeräte durch Schnapp- oder Klippbefestigungen festgeklemmt werden.

Bei einem derartigen bekannten Halter (DE-AS 24 26 381) sind an einem vorzugsweise als Spritzteil ausgebildeten, auf Normprofiltragschienen aufschnappbaren Schnellbefestigungssockel zur Halterung eines Schaltgerätes zwei feste Haken vorgesehen, die einen der beiden Längsflansche von im Querschnitt hutförmig ausgebildeten Normprofiltragschienen hintergreifen, während am gegenüberliegenden Längsflansch ein quer zur Schienenlängsachse entgegen Federwirkung verschiebbarer beweglicher Haken angreift. Dieser Schnellbefestigungssockel mit den beiden feststehenden und einem beweglichen Haken ist dabei so ausgebildet, daß mit ihm elektrische Schalt- und Installationsgeräte nur jeweils auf einer einzigen Normprofiltragschiene befestigt werden können.

Bei Schaltgeräten oder Kombinationen derartiger Geräte, die wegen ihrer Größe und ihres Gewichtes nicht auf einer einzigen Tragschiene festgeklemmt werden können, ist jedoch die Befestigung mit Problemen verbunden, da die üblichen Klemmbefestigungen hier versagen.

Es sind bereits verschiedene Lösungen dieses Problems versucht worden, die jedoch Nachteile aufweisen. Entweder muß das Gerät von den beiden Schmalseiten her zugänglich sein (DE-OS 32 48 124), um die Klemmbefestigungen an den beiden Normprofiltragschienen zu lösen, oder die Klemmung ist nicht sicher genug, insbesondere gegen seitliches Verrutschen und Verkanten auf der Tragschiene, so daß zu der vorstehend beschriebenen Lösung nach der DE-AS 24 26 381 mit einer zusätzlichen Klemmwippe gegriffen werden muß, durch die der Halter für das elektrische Schalt- oder Installationsgerät noch zusätzlich mittels einer Klemmschraube zwischen den beiden festen Haken an dem betreffenden Längsflansch der Normprofiltragschiene festgeklemmt werden muß.

Weiterhin können bei den bekannten Klemmbefestigungen die Geräte auch nur dann auf zwei Schienen aufgeklemmt werden, wenn sie ursprünglich dafür ausgebildet sind. Dies gilt insbesondere für eine Befestigung von elektrischen Installations- und Schaltgeräten auf Normprofiltragschienen, insbesondere auf Hutprofilschienen, wie sie aus der DE-OS 31 49 310 bekannt geworden ist, bei der das Schalt- oder Installationsgerät an seiner Unterseite eine mittige Aussparung für die Hutprofilschiene aufweist, neben der beiderseits entgegen Federkraft verschiebbare Klemmbefestigungshaken vorgesehen sind, die die beiden Längsflansche der Hutprofilschiene randseitig untergreifen und nach Bedarf mittels Halteschrauben an einem festen Träger für das Schaltgerät zusätzlich festgelegt werden.

Der Erfindung liegt die Aufgabe zugrunde, einen verbesserten Halter für elektrische Schalt- und Installationsgeräte zu schaffen, der einerseits so ausgebildet ist, daß er wahlweise an einer einzelnen oder an zwei parallelen Normprofiltragschienen befestigt werden kann, und der außerdem Befestigungseinrichtungen zur wahlweisen Befestigung an Schalt- und Installationsgeräten der unterschiedlichsten Art aufweist, wenn nur dafür Sorge getragen ist, daß diese mittels Schrauben oder ähnlicher Befestigungseinrichtungen mit dem Halter verbunden werden können.

Diese Aufgabe wird erfindungsgemäß durch den Kennzeichnungsteil des Anspruches 1 gelöst, während in den Ansprüchen 2 bis 7 besonders vorteilhafte Weiterbildungen der Erfindung gekennzeichnet sind.

Durch die Erfindung ergibt sich ein besonders vorteilhafter, für die verschiedensten Arten von Installations- und Schalt- geräten verwendbarer Halter, der aufgrund seiner innen und seiner weiter außen liegenden Schnappbefestigungseinrichtungen ohne jede konstruktive Veränderung an dem Halter wahlweise an nur einer einzigen Normprofiltragschiene befestigt werden kann, was dann im mittleren Teil des Halters geschieht, oder an zwei an genormtem Abstand parallel nebeneinanderliegenden Normprofiltragschienen, bei denen dann der Halter mit seinen beiden außenliegenden Haken die außenliegende Längskante bzw. den Längsflansch der einen Normprofiltragschiene hintergreift, während er am außenliegenden Flansch der anderen parallelen Normprofiltragschiene durch das an dem Schieber vorhandene zweite Paar von federnd verschiebbaren Haken gesichert wird.

Die gemeinsame Anordnung der beiden Paare von beweglichen Haken an einem einzigen Schieber hat außerdem den Vorteil, daß der Halter mit dem daran befestigten Installations- oder Schaltgerät jeweils nur von ein und derselben Seite her gelöst werden kann, unabhängig davon, ob er nur an einer einzelnen oder an zwei parallelen Normprofiltragschienen angebracht worden ist.

Die zwischen den festen und beweglichen Haken angeordneten, von dem Halter nach unten gerichteten, leicht abgeschrägten glatten Anschlagstege für die beiden innenliegenden Schienenkanten sorgen bei einer Befestigung des Halters an zwei parallelen Normprofiltragschienen in einfacher Weise dafür, daß der Halter bereits vor dem Einrasten der federnd verschiebbaren Haken gegen eine Verschiebung quer zur Längsrichtung der Normprofiltragschienen in einfacher Weise gesichert ist.

Außerdem wird durch die gemäß Anspruch 3 von dem Halter nach unten gebogenen, vorzugsweise federnden Widerlager-Druckstücke dafür gesorgt, daß der Halter sich sowohl bei dem Befestigungsvorgang selbst als auch nach der Befestigung entweder an einer einzigen Normprofiltragschiene oder an zwei parallelen Normprofiltragschienen nicht von selbst in Schienenlängsrichtung verschieben kann.

Durch die Merkmale der Ansprüche 4 bis 7 wird eine im übrigen besonders vorteilhafte und sowohl in der Herstellung als auch in der Handhabung bei der Montage einfache Ausführungsform eines solchen Halters erreicht.

Ein bevorzugtes Ausführungsbeispiel der Erfindung ist in der Zeichnung schematisch dargestellt. Es zeigen

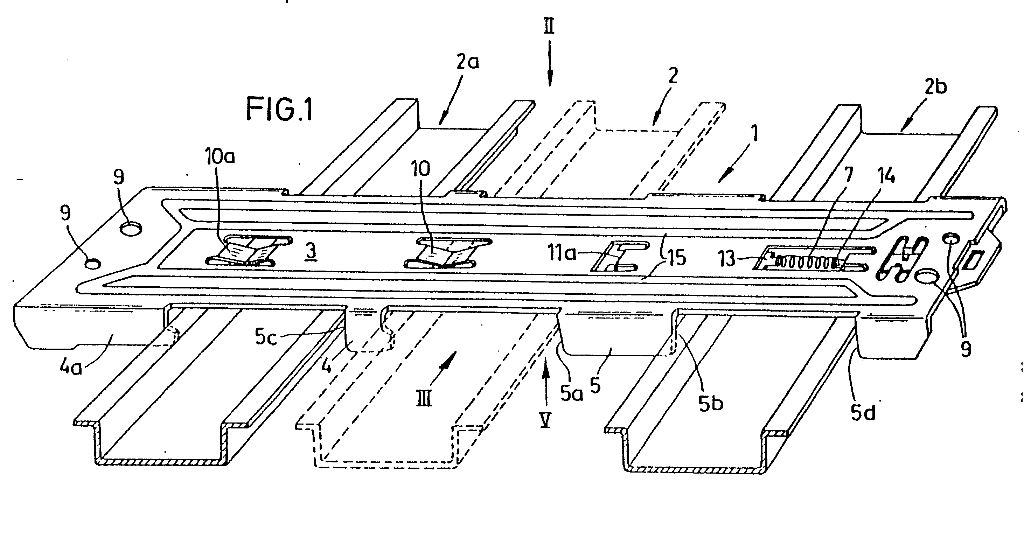

Fig. 1 einen Halter zur wahlweisen Befestigung an einer einzelnen Normprofiltragschiene oder an zwei parallelen Normprofiltragschienen in perspektivischer Ansicht,

Fig. 2 eine Draufsicht auf den Halter in Richtung des Pfeiles II von Fig. 1,

Fig. 3 eine Seitenansicht des Halters in Richtung des Pfeiles III von Fig. 1,

Fig. 4 einen Längsschnitt durch den Halter gemäß Schnittlinie IV - IV von Fig. 2 und

Fig. 5 eine Unteransicht des Halters in Richtung des Pfeiles V von Fig. 1.

Der in der Zeichnung gezeigte Halter 1 dient zur Schnappbefestigung von elektrischen Schalt- und Installationsgeräten auf Normprofiltragschienen 2, 2a, 2b und besteht aus einer aus Blech gestanzten Montageplatte 3, von der jeweils feste Hakenpaare 4, 4a und Anschlagstege 5, 5a, 5b, 5c als seitliche Randlappen parallel zueinander nach unten abgewinkelt sind.

Wie in der Zeichnung im einzelnen zu erkennen ist, ist der Halter 1 in seinem mittleren Teil 1a mit nach unten gerichteten Paaren von Haken 4, 6 ausgebildet, die einander beiderseits einer nur gestrichelt angedeuteten einzelnen Normprofiltragschiene 2 gegenüberliegen und von denen ein Hakenpaar 4 am Halter 1 fest angeordnet ist, während das andere Hakenpaar 6 an einem entgegen dem Druck einer Feder 7 verschiebbaren Schieber 8 ausgebildet ist, der an dem Halter zwischen seitlichen Anschlagstegen 5 für die dem festen Hakenpaar 4 gegenüberliegende Kante der Normprofiltragschiene 2 geführt ist und eine lösbare Verbindung zwischen dem Halter 1 und der Normprofiltragschiene 2 herstellt. Außerdem weist der Halter 1 Einrichtungen in Form von mehreren Schraubbefestigungsöffnungen 9 zur wahlweisen Befestigung von Schalt- und Installationsgeräten mit unterschiedlichen Abmessungen an seiner Oberseite auf.

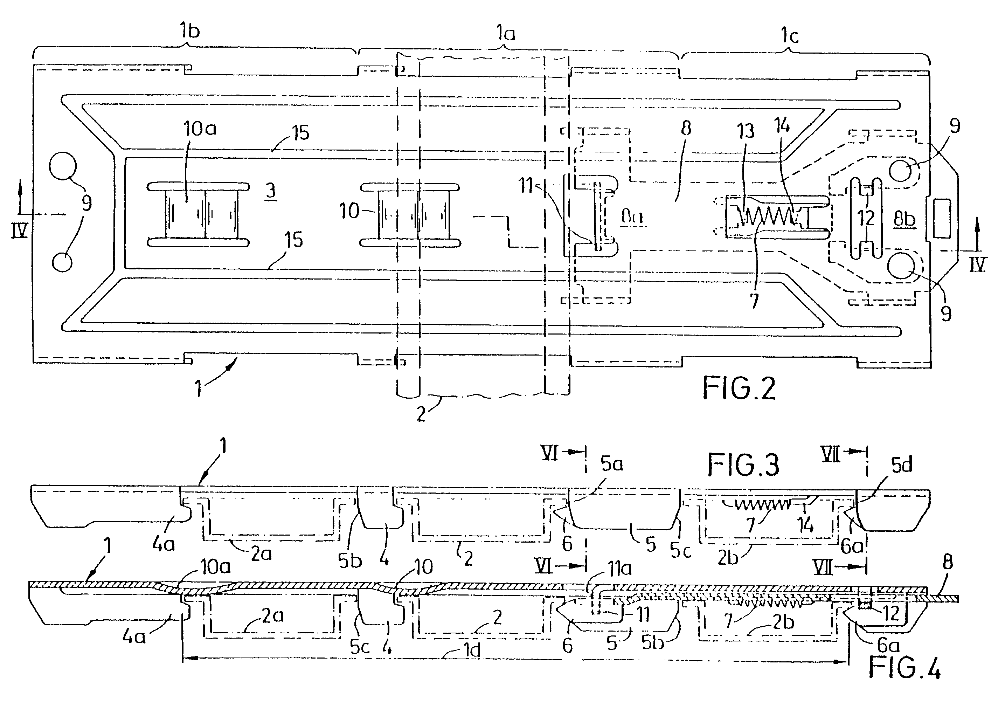

Der Halter 1 kann entweder nur an einer einzigen Normprofiltragschiene 2 oder an zwei in einem genormten gegenseitigen Abstand voneinander angeordneten Normprofiltragschienen 2a, 2b befestigt werden und weist zu diesem Zweck sowohl hinter dem ersten festen Hakenpaar 4 als auch hinter dem ersten federnd verschiebbaren Hakenpaar 6 jeweils ein weiteres, vom Halter 1 nach unten ragendes festes Hakenpaar 4a und ein verschiebbares Hakenpaar 6a auf. Dieses zusätzliche feste Hakenpaar 4a und das zusätzliche, mit dem Schieber 8 bewegliche Hakenpaar 6a sind an dem nach beiden Seiten 1b, 1c entsprechend verlängerten Halter 1 in einem solchen gegenseitigen Abstand 1d (Fig. 4) quer zur Schienenlängsrichtung angeordnet, daß je nach Befestigung des Halters 1 an nur einer Normprofiltragschiene 2 in seinem mittleren Teil 1a oder an zwei parallel nebeneinanderliegenden Normprofiltragschienen 2a, 2b an den beiden Enden 1b, 1c des Halters 1 einmal die weiter innen liegenden festen und verschiebbaren Paare von Haken 4, 6 die einzige Normprofiltragschiene 2 und zum anderen die jeweils dahinter, weiter außen liegenden festen und verschiebbaren Paare von Haken 4a, 6a die beiden parallelen Normprofiltragschienen 2a, 2b an den jeweils außen liegenden Schienenkanten hintergreifen.

Um eine Verschiebung des Halters 1 quer zur Längsachse der Normprofiltagschienen 2, 2a, 2b insbesondere dann zu verhindern, wenn der Halter 1 auf die Normprofiltragschienen 2, 2a, 2b gerade aufgeschnappt worden ist, bevor die federnd beweglichen Haken 6, 6a in ihre Einraststellung gelangt sind, sind beiderseits der Befestigungseinrichtung für nur eine Normprofiltragschiene 2 vom Halter nach unten gerichtete, leicht abgeschrägte glatte Anschlagstege 5 vorhanden, die außerdem auch bei Befestigung des Halters 1 an den beiden innenliegenden Schienenkanten von zwei parallelen Normprofiltragschienen 2a, 2b zur Wirkung kommen.

Zur weiteren Sicherung gegen Längsverschiebung an den Normprofiltragschienen 2, 2a, 2b ist an dem Halter 1 zwischen jedem der beiden nach unten gerichteten festen Hakenpaare 4, 4a ein vom Halter 1 nach unten gebogenes, vorzugsweise federndes, den darunter befindlichen Flansch der Normprofiltragschienen 2, 2a gegen die festen Haken 4, 4a andrückendes Widerlager-Druckstück 10, 10a vorhanden.

Der Schieber 8 mit den nach unten gerichteten beiden Paaren von verschiebbaren Haken 6, 6a, die an den beiden Schieberenden 8a, 8b jeweils parallel zueinander angeordnet sind, ist an zwei von der Blechplatte 3 im Bereich der Hakenpaare 6, 6a nach unten abgewinkelten Paaren von Führungszungen 11, 12 geführt, wobei sich zwischen den Führungszungen 11, 12 am Schieber 8 ein Widerlagerzapfen 13 für eine Schraubendruckfeder 7 befindet, die mit ihrem anderen Ende an einem feststehenden Widerlagerzapfen 14 an der Montageplatte 3 abgestützt ist.

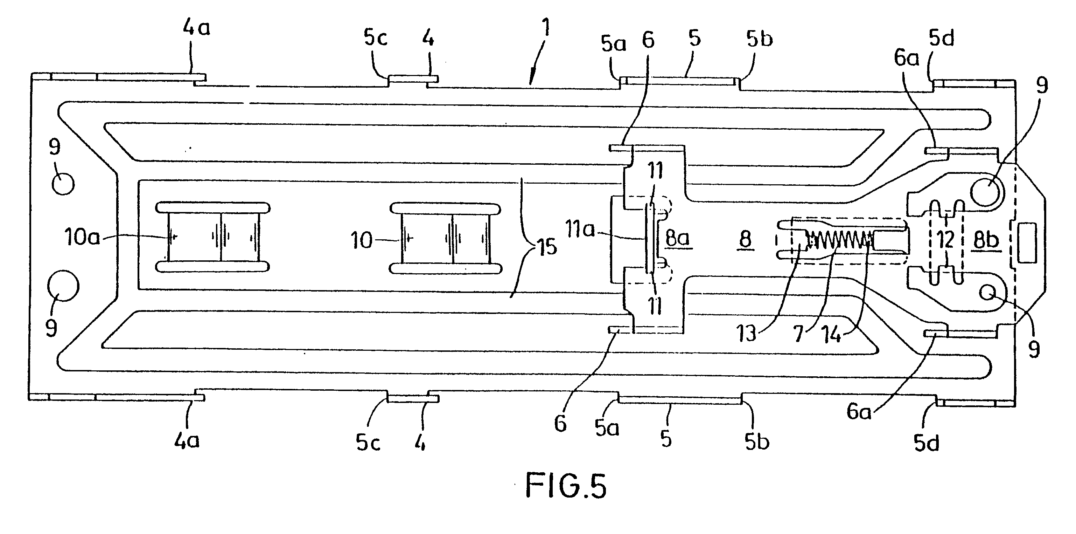

Die Montageplatte 3 weist im übrigen mindestens zwei, quer zu den Normprofiltragschienen 2, 2a, 2b verlaufende, nach unten ausgeprägte parallele Versteifungssicken 15 auf, die einerseits die Platte 3 quer zu den Normprofiltragschienen 2, 2a, 2b versteifen, an denen aber auch der Schieber 8 verschiebbar gelagert ist, und zwar beiderseits der etwa umgekehrt T-förmig nach außen gerichteten beiden Führungszungen 11, die an einem von der Blechplatte 3 nach unten abgewinkelten T-förmigen Lappen 11a ausgebildet sind, der zugleich als Begrenzungsanschlag für die Längsverschiebung des Schiebers 8 gegen die Normprofiltragschienen 2, 2b dient (Fig. 2, 4 und 5).

## Patentansprüche

1. Halter zur Schnappbefestigung von elektrischen Schalt-und Installationsgeräten auf Normprofiltragschienen (2, 2a, 2b) mit im mittleren Teil (1a) des Halters (1) nach unten gerichteten, einander beiderseits der Normprofiltragschiene (2) gegenüberliegenden Paaren von Haken (4, 6), von denen ein Hakenpaar (4) am Halter (1) fest angeordnet und das andere Hakenpaar (6) an einem entgegen Federdruck verschiebbaren Schieber (8) ausgebildet ist, der an dem Halter zwischen seitlichen Anschlagstegen (5) für die dem festen Hakenpaar (4) gegenüberliegende Kante der Normprofiltragschiene (2) geführt ist und eine lösbare Verbindung zwischen dem Halter (1) und der Normprofiltragschiene (2) herstellt, und mit Einrichtungen zur wahlweisen Befestigung von Schalt-und Installationsgeräten an der Oberseite des Halters (1), **dadurch gekennzeichnet,** daß der Halter (1) hinter dem festen Hakenpaar (4) und hinter dem federnd verschiebbaren Hakenpaar (6) jeweils ein weiteres, nach unten ragendes festes und ein verschiebbares Hakenpaar (4a, 6a) aufweist, die an dem Halter (1) bzw. an dem Schieber (8) in einem solchen gegenseitigen Abstand (1d) quer zur Schienenlängsrichtung angeordnet sind, daß der nach beiden Seiten (1b, 1c) entsprechend verlängerte Halter (1) je nach Befestigung an nur einer Normprofiltragschiene (2) in seinem mittleren Teil (1a) oder an zwei parallel nebeneinander liegenden Normprofiltragschienen (2a, 2b) an den beiden Enden (1b, 1c) des Halters (1) einmal mit den weiter innen liegenden festen und verschiebbaren Paaren von Haken (4, 6) die einzige Normprofiltragschiene (2) und zum anderen mit den jeweils dahinter, angeordneten weiter außen liegenden festen und verschiebbaren Paaren von Haken (4a, 6a) die beiden parallelen Normprofiltragschienen (2a, 2b) an den jeweils außenliegenden Schienenkanten hintergreift.

2. Halter nach Anspruch 1, **dadurch gekennzeichnet,** daß beiderseits der Befestigungseinrichtung für nur eine Normprofiltragschiene (2) vom Halter (1) nach unten gerichtete, leicht abgeschrägte glatte Anschlagstege (5, 5b, 5c) für die beiden innenliegenden Schienenkanten bei Befestigung an zwei parallelen Normprofiltragschienen (2a, 2b) vorhanden sind.

3. Halter nach Anspruch 1 oder 2, **dadurch gekennzeichnet,** daß zwischen jedem der beiden nach unten gerichteten festen Hakenpaare (4, 4a) ein vom Halter (1) nach unten gebogenes, vorzugsweise federndes, den Flansch der Normprofiltragschiene (2, 2a) gegen die festen Haken (4, 4a) andrückendes Widerlager-Druckstück (10, 10a) vorhanden ist.

4. Halter nach einem der Ansprüche 1 bis 3, **dadurch gekennzeichnet,** daß er aus einer aus Blech gestanzten Montageplatte (3) besteht, von der die festen Hakenpaare (4, 4a) und die Anschlagstege (5, 5a, 5b, 5c, 5d) als seitliche Randlappen parallel zueinander nach unten abgewinkelt sind.

5. Halter nach Anspruch 1 bis 4, **dadurch gekennzeichnet,** daß der Schieber (8) mit den nach unten gerichteten beiden Paaren von verschiebbaren Haken (6, 6a) an zwei von der Blechplatte (3) im Bereich der Hakenpaare (6, 6a) nach unten abgewinkelten Paaren von Führungszungen (11, 12) geführt ist, und daß zwischen den Führungszungen (11, 12) am Schieber (8) ein Widerlagerzapfen (13) für eine Schraubendruckfeder (7) vorgesehen ist, die mit ihrem anderen Ende an einem feststehenden Widerlagerzapfen (14) an der Montageplatte (3) abgestützt ist.

6. Halter nach Anspruch 1 bis 5, **dadurch gekennzeichnet,** daß die Montageplatte (3) mindestens zwei quer zu den Normprofiltragschienen (2, 2a, 2b) verlaufende, nach unten ausgeprägte parallele Versteifungssicken (15) aufweist, an denen der Schieber (8) beiderseits der etwa umgekehrt T-förmig nach außen gerichteten Führungszungen (11) verschiebbar gelagert ist.

7. Halter nach Anspruch 1 bis 6, **dadurch gekennzeichnet,** daß die beiden T-förmig nach außen gerichteten Füngungszungen (11) für den Schieber (8) an einem von der Blechplatte (3) nach unten abgewinkelten T-förmigen Lappen (11a) ausgebildet sind, der zugleich als Begrenzungsanschlag für die Längsverschiebung des Schiebers (8) gegen die Normprofiltragschienen (2, 2b) dient.

## Claims

1. Holder for snap-mounting electrical switching or installation gear on standard rails (2, 2a, 2b), with pairs of hooks (4, 6) in the central part (1a) of the holder (1), directed downwards and place opposite each other on both sides of the rails (2). Of these one pair of hooks (4), is fixed to the holder (1), and the other pair (6) forms part of a movable slider (8), which functions against the pressure of a spring, and which ist placed on the holder between lateral stoppers (5) for the rail edge situated opposite the fixed pair of hooks (4), and forms a separable connection between the holder (1) and the rail (2), and with equipment for the optional fitting of switch and installation gear on the upper side of the holder (1), characterised by the fact that the holder (1) has behind the fixed pair of hools (4) and behind the spring-loaded movable pair of hooks (6) in each case a further fixed and a further movable pair of hooks (4a, 6a), which are placed on the holder (1) or the slider (8) respectively, on opposite sides at such distance (1d) across the direction of the rails so that the holder (1) correspondingly extended on both sides (1b, 1c) either according to its fixing to one standard profile bearing rail (2) in its central part (1a), or to two parallel standard profile bearing rails (2a, 2b) next to one another at both ends (1b, 1c) of the holder (1) in the one case with the fixed and movable pairs of hooks (4, 6) situated on the inside of the single standard profile bearing rail (2), and in the other case with the fixed and movable pairs of hooks (4a, 6a) situated outside and behind both parallel standard profile load bearing rails (2a, 2b), these clip on to the outside edges of the rails.

2. Holder as claimed in claim 1 characterised by the fact that on both sides of the fixing for a single standard profile load bearing rail (2) there are slightly bevelled smooth stoppers (5, 5b, 5c) facing downwards from the holder (1) for both inside edges of the rails on fixing to two parallel standard profile rails (2a, 2b).

3. Holder as claimed in claims 1 or 2, characterised in that between each of the two fixed pairs of hooks (4, 4a), facing downwards from the holder (1), there is a protruding sprung compression piece (10, 10a) also facing downward from the holder, forcing the flange of the standard profile rail (2, 2a) into contact with the fixed hooks.

4. Holder as claimed in claims 1 to 3, characterised in that it consists of a mounting plate (3) cut out of sheet metal from which the fixed pairs of hooks (4, 4a) and the stoppers (5, 5a, 5b, 5c, 5d) are angled over parallel to each other as lateral flanges.

5. Holder as claimed in claims 1 to 4, characterised in that the slider (8) with both downward facing pairs of movable hooks (6, 6a) is guided by two pairs of guides (11, 12) angled over from the metal plate (3) near the pairs of hooks (6, 6a), and by the fact that between the guides (11, 12) on the slider (8) a peg (13) for a screw threaded compression spring (7) is provided, supported at its other end on a fixed peg (14) on the mounting plate (3).

6. Holder as claimed in claims 1 to 5, characterised in that the mounting plate (3) has facing downwards at least two parallel stiffeners (15) running across the standard profile load bearing rails (2, 2a, 2b) on which the slider (8) is placed so that it can be moved on both sides of the guides (11), which turn outwards in their inverted T-shape.

7. Holder as claimed in claims 1 to 6, characterised in that the two T-shaped outward turning guides (11) for the slider (8) are formed on a T-shaped flange (11a) angled over downwards from the metal plate (3). This flange serves at the same time as a stop limiting the longitudinal movement of the slider (8) against the standard profile load bearing rails (2, 2a).

## Revendications

1. Support pour la fixation par encliquetage d'appareils de commutation ou d'installation èlectriques sur rails profilés normalisés (2, 2a, 2b) avec dans la partie centrale (1a) du support (1) des paires de crochets (4, 6) dirigés vers le bas, se faisant face des deux côtés du rails porteur à profil normalisé (2), dont une paire de crochets fixes (4) est disposée sur le support (1) et l'autre paire crochets (6) sur une coulisse (8) coulissable contre une pression de ressort, guidée sur le support entre des barrettes de butée latérales (5) pour l'arête du rail porteur (2) opposée à la paire de crochets fixes (4) et établissant une jonction détachable entre le support (1) et la rail porteur à profil normalisé, et munis de dispositifs pour la fixation optionnelle d'appareils decommutation d'installation sur le côte supérierur du support (1), caractérisé en ce que le support (1) présente respectivement derrière la paire de crochets fixes (4) et derrière la paire de crochets coulissables à ressort (6) une autre paire de crochets fixes dirigés vers le bas et une autre paire de crochets coulissables (4a, 6a), respectivement disposés sur le support (1) et la coulisse (8) à une distance mutuelle (1d) perpendiculairement à l'axe du rail porteur telle que, suivant que la fixation ne se fait que sur un rail porteur à profil normalisé (2) dans sa partie centrale (1a) ou sur deux rails porteurs parallèles situés l'un à côte de l'autre (2a, 2b) aux deux extrémités (1b, 1c) du support (1), le support (1) prolongé en conséquence des deux côtés (1b, 1c) vienne s'enclencher d'une part avec les paires de crochets fixes et coulissables intérieurs (4, 6) derrière l'unique rail porteur à profil normalisé (2) et d'autre part avec les paires de crochets fixes et coulissables (4a, 6a) sur les deux rails porteurs à profil normalisé parallèles (2a, 2b), respectivement sur les arêtes extérieures de rails.

2. Support selon revendication 1, caractérisé en ce qu'il existe des deux côtés du disositif de fixation pour un seul rail porteur à profit normalisé (2) des barrettes de butée lisses (5, 5b, 5c) dirgées vers le bas à partir du support (1), légèrement chanfreinées pour les deux arêtes intérieures de rail porteur en cas de fixation sur deux rails porteurs à profit normalisé parallèles (2a, 2b).

3. Support selon revendication 1 ou 2, caractérisé en ce qu'il existe entre chacune des deux paires de crochets fixes dirigés vers le bas (4, 4a) un élément de butée (10, 10a) recourbé vers le bas à partir du support (1), de préférence à ressort, pressant la bride du rail porteur à profil normalisé (2, 2a) contre les crochets fixes (4, 4a).

4. Support selon une des revendications 1 à 3, caractérisé en ce qu'il est formé d'une plaque de montage (3) en tôle estampée, à partir de laquelle les paires de crochets fixes (4, 4a) et les barrettes de butée (5, 5a, 5b, 5c, 5d) sont pliés vers le bas en tant qu'agrafes de bordure latérales parallèles entre elles.

5. Support selon revendications 1 à 4, caractérisé en ce que la coulisse (8) avec les deux paires de crochets coulissables (6, 6a) dirigés vers le bas, est quidée par deux paires de languettes de guidage (11, 12) recourbées vers le bas à partir de la plaque de tôle (3) dans la zone des paires de crochets (6, 6a), et qu'entre les languettes de guidage (11, 12) sur la coulisse (8) un tenon de butée (13) soit prévu pour un ressort cylindrique de compression (7), dont l'autre extrémité vient prendre appui sur un tenon de butée fixe (14) sur la plaque de montage (3).

6. Support selon revendications 1 à 5, caractérisé en ce que la plaque de montage (3) présente au moins deux moulures de raidissement (15) parallèles estampées vers le bas, perpendiculairement aux rails porteurs à profil normalisé (2, 2a, 2b), sur lesquelles la coulisse (8) est logée de maniére coulissable des deux côtés des languettes de guidage (11) sous forme de T renversé dirigées vers l'extérieur.

7. Support selon revendications 1 à 6, caractérisé en ce que les deux languettes de guidage (11) sous forme de T dirigées vers l'extérieur pour la coulisse (8) sont réalisées sur une agrafe (11a) en forme de T recourbée vers le bas à partir de la plague de tôle (3), servant simultanément de butée limiteuse du déplacement longitudinal de la coulisse (8) contre les rail porteures à profil normalisé (2, 2b).

FIG.1

EP 0 198 265 B1

FIG.2

FIG.3

FIG.4

8

FIG.5

EP 0 198 265 B1